# EUROPÄISCHE PATENTSCHRIFT

(11) **EP 0 838 467 B1**
(45) Veröffentlichungstag und Bekanntmachung des Hinweises auf die Patenterteilung: **02.04.2003**
(21) Anmeldenummer: 97115056.0
(22) Anmeldetag: 30.08.1997
(51) Int. Cl.: C07F 7/14, C07F 7/18, D06M 13/513, C08L 83/08, C08G 77/385

(54) **Verfahren zur Herstellung von Fluoralkyl-Gruppen tragenden Siliciumorganischen Verbindungen und deren Verwendung**
Fluoroalkyl-containing organosilicon compounds and their use
Composés organosiliciques contenant du fluoroalcyl et leur application

(30) Priorität: 26.10.1996 DE 19644561
(43) Veröffentlichungstag der Anmeldung: 29.04.1998
(73) Patentinhaber: Degussa AG, 40474 Düsseldorf (DE)
(72) Erfinder: Jenkner, Peter, Dr., 79618 Rheinfelden (DE); Frings, Albert-Johannes, Dr., 79618 Rheinfelden (DE); Horn, Michael, Dr., 79618 Rheinfelden (DE); Monkiewicz, Jaroslaw, Dr., 79618 Rheinfelden (DE); Standke, Burkhard, Dr., 79540 Lörrach (DE)

(56) Entgegenhaltungen:
- EP-A- 0 075 864
- EP-A- 0 075 865
- EP-A- 0 416 471
- EP-A- 0 596 646
- EP-A- 0 611 771
- EP-A- 0 652 222
- EP-A- 0 688 777
- EP-A- 0 690 067
- DE-A- 1 941 411
- PATENT ABSTRACTS OF JAPAN vol. 018, no. 625 (C-1279), 29.November 1994 & JP 06 239872 A (SHIN ETSU CHEM CO LTD), 30.August 1994,
- PATENT ABSTRACTS OF JAPAN vol. 014, no. 453 (C-0764), 28.September 1990 & JP 02 178292 A (NEOS CO LTD), 11.Juli 1990,

## Beschreibung

Die Erfindung betrifft ein Verfahren zur Herstellung von Fluoralkyl-Gruppen tragenden Silicium-organischen Verbindungen durch Umsetzung von Fluor-haltigen Olefinen mit einer Silicium-organischen Verbindung in Gegenwart eines Platin-Katalysators, wobei die Silicium-organische Verbindung mindestens eine H-Si-Gruppe enthält.

Ferner betrifft die vorliegende Erfindung die Verwendung solcher Fluoralkyl-Gruppen tragenden Silicium-organischen Verbindungen.

In den letzten Jahren wurden für Fluoralkylchlorsilane und Fluoralkylalkoxysilane aufgrund ihrer besonderen Eigenschaften eine große Zahl neuer Anwendungsgebiete gefunden. So werden diese Verbindungen beispielweise als Additive in Tensiden, als Schmiermittel, zur Oberflächenvergütung von Linsen und optischen Fasern, als Primer für Fluorharze, als Bestandteile kosmetischer Zubereitungen, als Modifikator in Fluorkautschuken und Siliconkautschuken und zur Herstellung öl-, schmutz- und wasserabweisender Oberflächen eingesetzt.

Es ist bekannt, daß für Hydrosilylierungen von Fluorolefinen mit den genannten Silanen Platin-Verbindungen als Katalysatoren eingesetzt werden können. Hier werden vor allem Verbindungen eingesetzt, in denen Platin in der Oxidationsstufe (+4) vorliegt. Diese Katalysatorsysteme weisen allerdings bei der Reaktion eine Reihe von Nachteilen auf:

In vielen Fällen kann nur in geschlossenen Systemen gearbeitet werden. Die JP 02,178,292 A2 offenbart die Umsetzung von F₃C(CF₂)₂C(CF₃)₂CH₂CH:CH₂ mit HSiCl₃ in einem verblasenen Glasrohr in Gegenwart von H₂PtCl₆ als Katalysator bei einer Temperatur von 100 °C über 3 h und einer Ausbeute von 83 %. Der EP 0 538 061 A2 ist eine Umsetzung von CF₃CF₂CF₂OCF(CF₃)CF₂OCF₂CF₂CH:CH₂ mit CH₃SiHCl₂ in Gegenwart von H₂PtCl₆ in einem Stahlautoklaven bei einer Reaktionstemperatur von 120 °C, einer Reaktionsdauer von 20 h und einer resultierenden Ausbeute von 67 % zu entnehmen.

Bei Normaldruck sind solche Reaktionen relativ langwierig. So ist der JP 06,239,872 A2 für die Umsetzung von C₃F₇O[CF(CF₃)CF₂O]₃CF(CF₃)CH:CH₂ mit (CH₃)₃₋ₙSiHClₙ (n = 1,2) in Gegenwart von H₂PtCl₆ bei einer Reaktionstemperatur von 150 °C eine Reaktionszeit von 48 Stunden zu entnehmen, hierbei resultiert eine Ausbeute von 88 %. Aus der WO 94/20442 ist für eine Hydrosilylierung beispielsweise nach 50 h Reaktionsdauer bei einer Reaktionstemperatur von 100 °C in Gegenwart von H₂PtCl₆ eine Ausbeute von 89 % bekannt. Ferner ist aus der WO 94/20442 bekannt, daß es zum Beispiel bei der Umsetzung von p-CF₃C₆H₄CH:CH₂ mit CH₃SiHCl₂ zu Isomerisierungen und damit zur Verringerung der Selektivität bei der Hydrosilylierung kommen kann, hier wird bei einer Ausbeute von 89 % ein Verhältnis von β-silyliertem zu α-silyliertem Fluorolefin von ca. 87:13 angeführt.

Vielfach sind dem Platinkatalysator zur Erhöhung der Selektivität und Reaktivität Komplexierungsreagenzien beigegeben, wobei zugleich in einigen Fällen auch eine bessere Löslichkeit der Platinverbindung erhalten wird. So lehrt beispielsweise die JP 03,106,889 A2 den Zusatz von Aceton. Der EP 0 466 958 A1 ist als Zusatz das Isopropanol zu entnehmen und die EP 0 573 282 A1 offenbart die Verwendung von H₂PtCl₆ in 2-Ethylhexanal. Ferner ist die Zugabe von m-Xylolhexafluorid zum Pt-Katalysator bekannt (EP 0 573 282 A1). Für all diese Beispiele ist der Kosten- und Präparationsaufwand beachtlich.

Vor allem aber weisen die zuvor genannten Katalysatorsysteme keine zufriedenstellende Reaktivität und Selektivität auf, so daß aus wirtschaftlicher Sicht solche Verfahren für die Herstellung von Fluoralkyl-Gruppen enthaltenden Silicium-organischen Verbindungen weniger interessant sind.

Aus DE-OS 19 41 411, FR-OS 2 474 890 sowie US 3 775 452 sind Platinkatalysatoren vom KARSTEDT-Typ bekannt. Im allgemeinen zeichnet sich dieser Katalysator-Typ durch hohe Stabilität - vor allem in oxidierend wirkender Matrix -, hohe Effektivität und geringe Isomerisationswirkung von C-Gerüsten aus. Solche Katalysatoren werden beispielsweise für die Herstellung bzw. Modifizierung von Siliconen eingesetzt.

EP-A-0 075 865 und EP-A-0 075 864 erwähnen Hydrosilylierungen an fluorierte ungesättigte Ether mittels Kanstedt-Katalysatoren.

Der vorliegenden Erfindung lag die Aufgabe zugrunde, ein Verfahren bereitzustellen, das es ermöglicht, in einfacher und wirtschaftlicher Weise Fluoralkyl-Gruppen tragende Silicium-organische Verbindungen herzustellen. Ein besonderes Anliegen der vorliegenden Erfindung war es, die Ausbeute bei der katalysierten Umsetzung von Fluor-haltigen Olefinen mit H-Si-Gruppen-enthaltenden Silicium-organischen Verbindungen zu verbessern.

Die gestellte Aufgabe wird erfindungsgemäß entsprechend den Angaben der Patentansprüche gelöst.

Überraschenderweise wurde nun gefunden, daß man Fluoralkyl-Gruppen tragende Silicium-organische Verbindungen in einfacher und wirtschaftlicher. Weise durch katalytische Umsetzung von Fluor-haltigen Olefinen mit einer Silicium-organischen Verbindung, die mindestens eine H-Si-Gruppe enthält, herstellen kann, indem man die Umsetzung in Gegenwart eines Pt(0)-Komplexkatalysators durchführt und die Fluoralkyl-Gruppen tragende Silicium-organische Verbindung aus dem Reaktionsgemisch gewinnt. So kann man nach dem vorliegenden Verfahren in hervorragender Weise Fluoralkyl-Gruppen tragende Silicium-organische Verbindungen mit Ausbeuten bis 99 % gewinnen.

Gegenstand der vorliegenden Erfindung ist daher ein Verfahren zur Herstellung von Fluoralkyl-Gruppen tragenden Silicium-organischen Verbindungen durch Umsetzung von Fluor-haltigen Olefinen mit einer Silicium-organischen Verbindung, die mindestens eine H-Si-Gruppe enthält, in Gegenwart eines Platin-Katalysators, das dadurch gekennzeichnet ist, daß man *für die Umsetzung mindestens ein Fluor-haltiges Olefin der allgemeinen Formel I*

*R*^{*1*} *Y CH = CH*_{*2*} *(I),*

*wobei*
*R*^{*1*} *eine mono-, oligo- oder perfluorierte Alkyl-Gruppe mit 1 bis 9 C-Atomen oder eine mono-, oligo- oder perfluorierte Aryl-Gruppe darstellt und Y eine -CH*_{*2*}*-Gruppe ist,*
*oder eines der Formel*

*CF*_{*3*}*(CF*_{*2*}*)*_{*n*}*CH=CH*_{*2*}

*mit n = 3, 5, 7 oder 9*
*oder eines der Formel*

*RfCH*_{*2*}*CH*_{*2*}*O(C=O)[C(CH*_{*3*}*)]=CH*_{*2*}*.*

*mit Rf* = *C*_{*n*}*F*_{*2n+1*}*, wobei n* = *2 bis 18 ist,*
*einsetzt,* die Umsetzung in Gegenwart eines Pt(0)-Komplexkatalysators durchführt und die Fluoralkyl-Gruppen tragende Silicium-organische Verbindung aus dem Reaktionsgemisch gewinnt.

Vorzugsweise setzt man beim erfindungsgemäßen Verfahren einen Pt(0)-Komplexkatalysator vom KARSTEDT-Typ ein. Geeigneterweise solche, die 0,01 bis 20 Gew.-% Platin, vorzugsweise 0,1 bis 10 Gew.-% Platin, besonders vorzugsweise 0,5 bis 5 Gew.-% Platin, enthalten. Bevorzugt werden beim erfindungsgemäßen Verfahren Bis[1,3-bis(. eta. 2-ethenyl)-1,1,3,3-tetramethyldisiloxan]platin(0), Triphenylphosphin-[1,3-bis(.eta.2-ethenyl)-1,1,3,3-tetramethyldisiloxan]platin(0) sowie 2,4,6,8-Tetraethenyl-2,4,6,8-tetramethylcyclotetrasiloxanplatin(0) als Katalysator eingesetzt. Das Katalysatorsystem kann für den Einsatz beim erfindungsgemäßen Verfahren in einem Lösemittel, das sich geeigneterweise bei der Umsetzung weitgehend inert verhält, gelöst sein, hierfür seien beispielsweise Xylol oder Toluol angeführt.

Beim erfindungsgemäßen Verfahren setzt man für die Umsetzung geeigneterweise mindestens ein Fluor-haltiges Olefin der allgemeinen Formel I

R¹ Y CH = CH₂ (I),

wobei R¹ eine mono-, oligo- oder perfluorierte Alkyl-Gruppe mit 1 bis 9 C-Atomen oder eine mono-, oligo- oder perfluorierte Aryl-Gruppe darstellt und Y eine -CH₂-, Gruppe ist, ein. Als Beispiele seien hier aufgeführt: CF₃(CF₂)ₙCH:CH₂ mit n = 3,5,7 sowie 9, R_{f}CH₂CH₂O(C:O)(C(CH₃)):CH₂ mit R_{f} = CₙF₂ₙ₊₁, wobei n = 2 bis 18 ist.

Als Silicium-organische Verbindung, die mindestens eine H-Si-Gruppe enthält, setzt man für die Umsetzung vorzugsweise ein Hydrogensilan der allgemeinen Formel II

H_{(4-a-b)} Si R² ₐ X_{b} (II),

wobei
R² gleiche oder verschiedene Alkyl-Gruppen mit 1 bis 20 C-Atomen, vorzugsweise Methyl- oder Ethyl-, oder Aryl-Gruppen, vorzugsweise Phenyl-, darstellt,
X ein Cl oder Br bedeutet und
a = 0, 1, 2 oder 3 und b = 0, 1, 2 oder 3 mit 1 ≤ (a + b) ≤ 3 sind,
oder
ein Disiloxan der allgemeinen Formel III

R² ₐ X_{b} H_{(3-a-b)} Si O Si H_{(3-a-b)} R² ₐ X_{b} (III),

wobei
R² gleiche oder verschiedene Alkyl-Gruppen mit 1 bis 20 C-Atomen, vorzugsweise Methyl- oder Ethyl-, oder Aryl-Gruppen, vorzugsweise Phenyl-, darstellt,
X jeweils ein Cl oder Br bedeutet und
a = 0, 1 oder 2 und b = 0, 1 oder 2 mit 1 ≤ (a + b) ≤ 2 sind,
oder
ein cyclisches Siloxan der allgemeinen Formel IV

(R² ₐ X_{b} Si O)ₓ (R² ₛ Xₜ H₍₂₋ₛ₋ₜ₎ Si O)_{y} (IV),

wobei
R² gleiche oder verschiedene Alkyl-Gruppen mit 1 bis 20 C-Atomen, vorzugsweise Methyl- oder Ethyl-, oder Aryl-Gruppen, vorzugsweise Phenyl, darstellt,
X jeweils ein Cl oder Br bedeutet,
a = 0, 1 oder 2 und b = 0, 1 oder 2 mit (a + b) = 2 sind und
x einen Wert von 0 bis 5 annimmt,
s = 0 oder 1 und t = 0 oder 1 mit 0 ≤ (s + t) ≤ 1 sind und
y einen Wert von 1 bis 5 mit 3 ≤ (x + y) ≤ 5 annimmt,
oder
lineare Polysiloxangemische der allgemeinen Formel V

R² ₐ X_{b} Si O (R² _{f} Xᵢ Si O)_{q} (R² ₛ Xₜ H₍₂₋ₛ₋ₜ₎ Si O)ᵣ Si R² ₐ X_{b}, (V),

wobei
R² gleiche oder verschiedene Alkyl-Gruppen mit 1 bis 20 C-Atomen, vorzugsweise Methyl- oder Ethyl-, oder Aryl-Gruppen, vorzugsweise Phenyl-, darstellt,
X jeweils ein Cl oder Br bedeutet,
a = 0, 1, 2 oder 3 und b = 0, 1, 2 oder 3 mit (a + b) = 3 sind, f= 0, 1 oder 2 und
i = 0, 1 oder 2 mit (f + i) = 2 sind und
q ≥ 0 ist, s = 0 oder 1 und t = 0 oder 1 mit 0 ≤ (s + t) ≤ 1 sind und r ≥ 1 ist mit 50 ≤ (q + r) ≤ 50.000, vorzugsweise 5.000 bis 10.000,
ein.

So können beim erfindungsgemäßen Verfahren als Silicium-organische Verbindung, die mindestens eine H-Si-Gruppe enthält, beispielsweise HSiCl₃, HSiCH₂Cl₂, oder HSi(CH₂)₂Cl eingesetzt werden.

Im allgemeinen führt man das erfindungsgemäße Verfahren so durch, daß man beispielsweise in einem Rührkessel, der beheizbar sowie kühlbar ausgeführt sein kann, über eine Rührvorrichtung und Rückflußkühlung verfügt und geeigneterweise unter Stickstoff betrieben werden kann, das Fluor-haltige Olefin vorlegt und den Pt(0)-Katalysator, vorzugsweise in einem Lösemittel gelöst, zugibt.

Beim erfindungsgemäßen Verfahren steht die eingesetzte Masse an Platin, bezogen auf die Masse der Einsatzstoffe der allgemeinen Formel I, vorzugsweise in einem Verhältnis von 1 : 100 bis 1 : 100.000, besonders vorzugsweise in einem Verhältnis von 1 : 1.000 bis 1 : 30.000, ganz besonders vorzugsweise in einem Verhältnis von 1 : 5.000 bis 1 : 20.000.

Über eine Dosiervorrichtung kann nun die Silicium-organische Verbindung, die mindestens eine H-Si-Gruppe enthält, dem Reaktionsbehälter zugeführt werden.

Die Zugabe der Silicium-organischen Verbindung, die mindestens eine H-Si-Gruppe enthält, beginnt in der Regel bei Raumtemperatur. Die dabei auftretende Exothermie kann zur Einstellung der Reaktionstemperatur für die erfindungsgemäße Umsetzung genutzt werden. Da somit eine Heizquelle nicht zwangsläufig benötigt wird und die Reaktion auch schon bei Atmosphärendruck anläuft, ist der apparative Aufwand beim erfindungsgemäßen Verfahren im allgemeinen gering. Ein Überschuß der Silicium-organischen Verbindung, die mindestens eine H-Si-Gruppe enthält, wird in der Regel nicht benötigt, was auch den Anteil der nach Durchführung des erfindungsgemäßen Verfahrens gegebenenfalls noch verbleibenden und zu entsorgenden Verbindungen bzw. Nebenprodukte minimiert.

Die Zugabe der Silicium-organischen Verbindung, die mindestens eine H-Si-Gruppe enthält, erfolgt beim erfindungsgemäßen Verfahren (500 ml - Labormaßstab) im allgemeinen über 20 bis 120 Minuten, vorzugsweise 30 bis 60 Minuten. In der Regel läßt man danach nun noch 1 bis 5 h nachrühren.

Beim erfindungsgemäßen Verfahren führt man die Umsetzung vorzugsweise bei einer Temperatur im Bereich von 110 bis 200 °C durch, besonders vorzugsweise im Bereich von 20 bis 150 °C. Geeigneterweise liegt dabei der Druck im Bereich von 1 bis 50 bar abs., vorzugsweise im Bereich von 1 bis 10 bar abs.

Aus dem bei der Umsetzung des erfindungsgemäßen Verfahrens erhaltenen Reaktionsgemisch gewinnt man nun die Fluoralkyl-Gruppen tragende Silicium-organische Verbindung. Das Reaktionsgemisch kann beispielsweise destillativ ausgearbeitet werden.

So kann man nach dem erfindungsgemäßen Verfahren in einfacher und wirtschaftlicher Weise, beispielsweise 3,3,4,4,5,5,6,6,7,7,8,8,9,9,10,10,10-Heptadecafluoroctyltrichlorsilan, 3,3,4,4,5,5,6,6,7,7,8,8,8-Tridecafluoroctylmethyldichlorsilan und 3-(1,1,2,2-Tetrafluorethoxy)propyltrichlorsilan herstellen.

Das erfindungsgemäße Verfahren bietet den Vorteil, die Synthese von Fluoralkyl-Gruppen tragenden Silicium-organischen Verbindungen unter milden Reaktionsbedingungen und hohen Ausbeuten, hoher Selektivität und unter Einsatz geringer Katalysatorkonzentrationen zu ermöglichen. Im allgemeinen werden hier weder Isomerisierungen der Doppelbindung bei der Anlagerung z. B. an Trichlorsilane, Alkylchlorsilane oder Arylchlorsilane, noch Isomerisierungen der Fluoralkyl-Reste beobachtet. Als weitere Vorteile des erfindungsgemäßen Verfahrens sind auch die kurzen Reaktionszeiten und der gleichmäßige Ablauf der Reaktion zu nennen.

Fluoralkyl-Gruppen tragende Silicium-organische Verbindungen, die ferner mindestens eine Cl-Si-Gruppe oder Br-Si-Gruppe enthalten und nach dem zuvor dargestellten Verfahren zur Hydrosilylierung in Gegenwart eines Pt(0)-Komplex-Katalysators, insbesondere derer vom KARSTEDT-Typ, erhältlich sind, können mit einem Alkohol, so z. B. Methanol, Ethanol, n-Propanol, i-Propanol, n-Butanol, i-Butanol, t-Butanol oder 2-Methoxyethanol, zu den entsprechenden Alkoxy-Si-Verbindungen verestert werden. Dabei kann als Edukt auch das Reaktionsgemisch, wie es im oben dargestellten Verfahren zur Herstellung von Fluoralkyl-Gruppen tragenden Silicium-organischen Verbindungen anfällt, d. h. ohne vorhergehende destillative Reinigung, für die an sich bekannte Veresterung einer Cl-Si- oder Br-Si-Gruppe mit einem Alkohol eingesetzt werden. Der Veresterungsschritt verläuft in der Regel glatt. Die Abtrennung noch verbliebener leichtflüchtiger Anteile kann über eine einfache Destillation erfolgen, so erhält man Fluoralkyl- und Alkoxy-Gruppen tragende Silicium-organische Verbindungen mit einer Reinheit von 98,5 bis 99,9 GC-WLD-F1.-% (= Prozent der integrierten Peakfläche im Chromatogramm aus der Detektion mittels Wärmeleitfähigkeitsdetektor), so z. B. 3,3,4,4,5,5,6,6,7,7,8,8,8-Tridecafluoroctyltrichlorsilan. Die vorliegenden erfindungsgemäßen Verfahren können kostengünstig und effizient durchgeführt werden.

Daher *betrifft die* vorliegenden Erfindung ein Verfahren, *wobei man eine Fluoralkyl-Gruppen tragende Silicium-organische Verbindung, die nach mindestens einem der Ansprüche 1 bis 13 erhalten wird und die mindestens eine Cl-Sioder Br-Si-Gruppe enthält, nachfolgend mit einem einwertigen Alkohol umsetzt und das Produkt der Veresterung aus dem Reaktionsgemisch gewinnt.* *Verwenden kann man erfindungsgemäß hergestellte* Fluoralkyl-Gruppen tragenden Silicium-organischen Verbindungen *beispielsweise* als Textilhilfsmittel oder in Zubereitungen, die als Textilhilfsmittel eingesetzt werden, als solche oder in Zubereitungen für die Oberflächenvergütung von Kunststoffen, Glas, Metallen, Keramiken und Steinen sowie als Bautenschutzmittel oder in Zubereitungen, die als Bautenschutzmittel eingesetzt werden.

Die Erfindung wird durch die nachfolgenden Beispiele näher erläutert:

### Beispiele

### Vergleichsbeispiel 1

In einem 500 ml Dreihalsglaskolben, versehen mit aufgesetztem Wasserkühler, Magnetrührer, Thermometer und Tropftrichter, werden unter N₂-Atmosphäre 126 g (0,8 mol) 1,1,2,2-Tetrafluorethylallylether vorgelegt und 0,4 g CPC 072 (Pt(0)-Divinyltetramethyldisiloxan in Xylol; Konzentration Pt:1,1,2,2-Tetrafluorethylallylether = 1:20 000) zugegeben. Dazu werden bei Raumtemperatur 108 g (0,8 mol) Trichlorsilan über einen Zeitraum von 80 min unter Rühren zugetropft. Die sofort einsetzende Reaktion ist exotherm, wobei die Temperatur auf 110 °C steigt. Nach Ende der Zugabe wird die Reaktionsmischung noch 1 h gerührt und danach GC-analytisch untersucht. Nach anschließender destillativer Reinigung über eine Kurzwegkolonne erhält man 225 g (0,77 mol) 3-(1,1,2,2-Tetrafluorethoxy)propyltrichlorsilan (Ausbeute: 96%, Reinheit: >98 GC-WLD-Fl.%).

### Beispiel 2

In einem 500 ml Dreihalsglaskolben, versehen mit aufgesetztem Wasserkühler, Magnetrührer, Thermometer und Tropftrichter, werden unter N₂-Atmosphäre 192 g (0,55 mol) 3,3,4,4,5,5,6,6,7,7,8,8,8-Tridecafluorocten vorgelegt und 0,3 g CPC 072 (Pt(0)-Divinyltetramethyldisiloxan in Xylol; Konzentration Pt:3,3,4,4,5,5,6,6,7,7,8,8,8-Tridecafluorocten = 1:20 000) zugegeben. Dazu werden bei Raumtemperatur 80 g (0,59 mol) Trichlorsilan über einen Zeitraum von 85 min unter Rühren zugetropft. Die sofort einsetzende Reaktion ist exotherm, wobei die Temperatur auf 115 °C steigt. Nach Ende der Zugabe wird die Reaktionsmischung noch 1,5 h gerührt und danach GC-analytisch untersucht. Nach anschließender destillativer Reinigung über eine Kurzwegkolonne erhält man 262 g (0,54 mol) 3,3,4,4,5,5,6,6,7,7,8,8,8-Tridecafluoroctyltrichlorsilan (Ausbeute: 99%, Reinheit: >97 GC-WLD-Fl.%).

### Beispiel 3

In einem 250 ml Laborstahlautoklav werden 123 g (0,5 mol) 3,3,4,4,5,5,6,6,6-Nonafluorhexen und 76 g (0,5 mol) Trichlorsilan mit 0,34 g CPC 072 (Pt(0)-Divinyltetramethyldisiloxan in Xylol; Konzentration Pt:3,3,4,4,5,5,6,6,6-Nonafluorhexen = 1:20000) vorgelegt. Der Autoklav wird verschlossen und in einem Ölbad auf 140 °C über 70 min erhitzt. Die exotherme Reaktion setzt nach ca. 8 min ein, wobei sich die Reaktionsmischung auf 165 °C erwärmt. Danach läßt man abkühlen, entleert den Reaktor und erhält nach Kurzwegdestillation 176 g (0,46 mol) 3,3,4,4,5,5,6,6,6-Nonafluorhexyltrichlorsilan (Ausbeute: 90%, Reinheit: >98 GC-WLD-Fl.%).

### Beispiel 4

544 g (1,83 mol) 3-(1,1,2,2-Tetrafluorethoxy)propyltrichlorsilan werden in einem 1 000 ml Dreihalsglaskolben, versehen mit aufgesetztem Wasserkühler, Magnetrührer, Thermometer und Tropftrichter, vorgelegt und unter Rühren 256 g (5,57 mol) Ethanol über 6,5 h zugetropft. Die Reaktion verläuß exotherm, wobei sich die Reaktionsmischung auf 110 °C erwärmt. Danach werden über weitere 90 min 165 g NaOEt-Lösung (21 % in Ethanol) zugegeben. Nach Abkühlen wird das entstandene NaCl abfiltriert und das Filtrat über eine Kurzwegkolonne destilliert. Man erhält 519 g (1,61 mol) 3-(1,1,2,2-Tetrafluorethoxy)propyltriethoxysilan (Ausbeute: 90%, Reinheit: >98 GC-WLD-Fl.%)

## Patentansprüche

1. Verfahren zur Herstellung von Fluoralkyl-Gruppen tragenden Silicium-organischen Verbindungen durch Umsetzung von Fluor-haltigen Olefinen mit einer Silicium-organischen Verbindung, die mindestens eine H-Si-Gruppe enthält, in Gegenwart eines Platin-Katalysators,
**dadurch gekennzeichnet,**
**daß** man für die Umsetzung mindestens ein Fluor-haltiges Olefin der allgemeinen Formel I
R¹ Y CH = CH₂ (I),
wobei
R¹ eine mono-, oligo- oder perfluorierte Alkyl-Gruppe mit 1 bis 9 C-Atomen oder eine mono-, oligo- oder perfluorierte Aryl-Gruppe darstellt und Y eine -CH₂-Gruppe ist,
oder eines der Formel
CF₃(CF₂)ₙCH=CH₂
mit n = 3, 5, 7 oder 9
oder eines der Formel
RfCH₂CH₂O(C=O)[C(CH₃)]=CH₂
mit Rf= CₙF₂ₙ₊₁, wobei n = 2 bis 18 ist,
einsetzt, die Umsetzung in Gegenwart eines Pt(0)-Komplexkatalysators durchführt und die Fluoralkyl-Gruppen tragende Silicium-organische Verbindung aus dem Reaktionsgemisch gewinnt.

2. Verfahren nach Anspruch 1,
**dadurch gekennzeichnet,**
**daß** man einen Pt(0)-Komplexkatalysator einsetzt,
der 0,01 bis 20 Gew.-% Platin enthält.

3. Verfahren nach Anspruch 1 oder 2,
**dadurch gekennzeichnet,**
**daß** man einen Pt(0)-Komplexkatalysator vom KARSTEDT-Typ einsetzt.

4. Verfahren nach Anspruch 3,
**dadurch gekennzeichnet,**
**daß** man Bis[1,3-bis(.eta.2-ethenyl)-1,1,3,3-tetramethyldisiloxan]platin(0), Triphenylphosphin-[1,3-bis(.eta.2-ethenyl)-1,1,3,3-tetramethyldisiloxan]platin(0) oder 2,4,6,8-Tetraethenyl-2,4,6,8-tetramethylcyclotetrasiloxanplatin(0) als Katalysator einsetzt.

5. Verfahren nach mindestens einem der Ansprüche 1 bis 4,
**dadurch gekennzeichnet,**
**daß** man für die Umsetzung ein Hydrogensilan der allgemeinen Formel II
H_{(4-a-b)} Si R²ₐ X_{b} (II),
wobei
R² gleiche oder verschiedene Alkyl-Gruppen mit 1 bis 20 C-Atomen oder Aryl-Gruppen darstellt,
X ein Cl oder Br bedeutet und
a = 0, 1, 2 oder 3 und b = 0, 1, 2 oder 3 mit 1 ≤ (a + b) ≤ 3 sind,
einsetzt.

6. Verfahren nach mindestens einem der Ansprüche 1 bis 4,
**dadurch gekennzeichnet,**
**daß** man für die Umsetzung ein Disiloxan der allgemeinen Formel III
R²ₐ X_{b} H_{(3-a-b)} Si O Si H_{(3-a-b)} R²ₐ X_{b} (III),
wobei
R² gleiche oder verschiedene Alkyl-Gruppen mit 1 bis 20 C-Atomen oder Aryl-Gruppen darstellt,
X jeweils ein Cl oder Br bedeutet und
a = 0, 1 oder 2 und b = 0, 1 oder 2 mit 1 ≤ (a + b) ≤ 2 sind,
einsetzt.

7. Verfahren nach mindestens einem der Ansprüche 1 bis 4,
**dadurch gekennzeichnet,**
**daß** man für die Umsetzung ein cyclisches Siloxan der allgemeinen Formel IV
(R²ₐ X_{b} Si O)ₓ (R²ₛ Xₜ H₍₂₋ₛ₋ₜ₎ Si O)_{y} (IV),
wobei
R² gleiche oder verschiedene Alkyl-Gruppen mit 1 bis 20 C-Atomen oder Aryl-Gruppen darstellt,
X jeweils ein Cl oder Br bedeutet,
a = 0, 1 oder 2 und b = 0, 1 oder 2 mit (a + b) = 2 sind und
x einen Wert von 0 bis 5 annimmt,
s = 0 oder 1 und t = 0 oder 1 mit 0 ≤ (s + t) ≤ 1 sind und
y einen Wert von 1 bis 5 mit 3 ≤ (x + y) ≤ 5 annimmt,
einsetzt.

8. Verfahren nach mindestens einem der Ansprüche 1 bis 4,
**dadurch gekennzeichnet,**
**daß** man für die Umsetzung lineare Polysiloxangemische der allgemeinen Formel V
R²ₐ X_{b} Si O (R²_{f} Xᵢ Si O)_{q} (R²ₛ Xₜ H₍₂₋ₛ₋ₜ₎ Si O)ᵣ Si R²ₐ X_{b} (V),
wobei
R² gleiche oder verschiedene Alkyl-Gruppen mit 1 bis 20 C-Atomen oder Aryl-Gruppen darstellt,
X jeweils ein Cl oder Br bedeutet,
a = 0, 1, 2 oder 3 und b = 0, 1, 2 oder 3 mit (a + b) = 3 sind, f = 0, 1 oder 2 und i = 0, 1 oder 2 mit (f + i) = 2 sind und
q ≥ 0 ist, s = 0 oder 1 und t = 0 oder 1 mit 0 ≤ (s + t) ≤ 1 sind und r ≥ 1 ist mit 50 ≤ (q + r) ≤ 50.000,
einsetzt.

9. Verfahren nach mindestens einem der Ansprüche 1 bis 8,
**dadurch gekennzeichnet,**
**daß** die eingesetzte Masse an Platin bezogen auf die Masse der Einsatzstoffe der allgemeinen Formel I in einem Verhältnis von 1 : 100 bis 1 : 100.000 steht.

10. Verfahren nach mindestens einem der Ansprüche 1 bis 9,
**dadurch gekennzeichnet,**
**daß** man die Umsetzung bei einer Temperatur im Bereich von 10 bis 200 °C durchführt.

11. Verfahren nach Anspruch 10,
**dadurch gekennzeichnet,**
**daß** man die Umsetzung bei einer Temperatur im Bereich von 20 bis 150 °C durchführt.

12. Verfahren nach mindestens einem der Ansprüche 1 bis 11,
**dadurch gekennzeichnet,**
**daß** man die Umsetzung bei einem Druck im Bereich von 1 bis 50 bar absolut durchführt.

13. Verfahren nach Anspruch 12,
**dadurch gekennzeichnet,**
**daß** man die Umsetzung bei einem Druck im Bereich von 1 bis 10 bar absolut durchführt.

14. Verfahren nach mindestens einem der Ansprüche 1 bis 13,
**dadurch gekennzeichnet,**
**daß** man eine Fluoralkyl-Gruppen tragende Silicium-organische Verbindung, die nach mindestens einem der Ansprüche 1 bis 13 erhalten wird und die mindestens eine Cl-Si- oder Br-Si-Gruppe enthält, nachfolgend mit einem einwertigen Alkohol umsetzt und das Produkt der Veresterung aus dem Reaktionsgemisch gewinnt.

## Claims

1. A process for preparing fluoroalkyl-containing organosilicon compounds by reacting fluorine-containing olefins with an organosilicon compound which contains at least one H-Si group, in the presence of a platinum catalyst, **characterized in that** the reaction is carried out employing at least one fluorine-containing olefin of the general formula I
R¹YCH=CH₂ (I),
in which R¹ is a mono-, oligo- or perfluorinated alkyl group of 1 to 9 carbon atoms or a mono-, oligo- or perfluorinated aryl group and Y is a -CH₂- group,
or employing a fluorine-containing olefin of the formula
CF₃(CF₂)ₙCH=CH₂
where n=3, 5, 7 or 9,
or employing a fluorine-containing olefin of the formula
RfCH₂CH₂O(C=O)[C(CH₃)]=CH₂
where Rf=CₙF₂ₙ₊₁, in which n = from 2 to 18,
the reaction is carried out in the presence of a Pt(0) complex catalyst and the fluoroalkyl-containing organosilicon compound is recovered from the reaction mixture.

2. A process according to claim 1, **characterized in that** a Pt(0) complex catalyst which contains from 0.01 to 20% by weight of platinum is employed.

3. A process according to claim 1 or 2, **characterized in that** a Pt(0) complex catalyst of the KARSTEDT type is employed.

4. A process according to claim 3, **characterized in that** bis[1,3-bis(eta-2-ethenyl)-1,1,3,3-tetramethyldisiloxane]platinum(0), triphenylphosphine[1,3-bis(eta-2-ethenyl)-1,1,3,3-tetramethyldisiloxane]platinum(0) or 2,4, 6, 8-tetraethenyl-2,4,6,8-tetramethylcyclotetrasiloxaneplatinum(0) is employed as catalyst.

5. A process according to at least one of claims 1 to 4, **characterized in that** the reaction is carried out employing a hydrosilane of the general formula II
H_{(4-a-b)}SiR²ₐX_{b} (II),
in which
R² is identical or different alkyl groups of 1 to 20 carbon atoms or aryl groups,
X is a Cl or Br, and
a = 0, 1, 2 or 3 and b = 0, 1, 2 or 3 where 1 ≤ (a + b) ≤ 3.

6. A process according to at least one of claims 1 to 4, **characterized in that** the reaction is carried out employing a disiloxane of the general formula III
R²ₐX_{b}H_{(3-a-b)}SiOSiH_{(3-a-b)}R²ₐX_{b} (III),
in which
R² is identical or different alkyl groups of 1 to 20 carbon atoms or aryl groups,
X is in each case a Cl or Br, and
a = 0, 1 or 2 and b = 0, 1 or 2 where 1 ≤ (a + b) ≤ 2.

7. A process according to at least one of claims 1 to 4, **characterized in that** the reaction is carried out employing a cyclic siloxane of the general formula IV
(R²ₐX_{b}SiO)ₓ(R²ₛXₜH₍₂₋ₛ₋ₜ₎SiO)_{y} (IV),
in which
R² is identical or different alkyl groups of 1 to 20 carbon atoms or aryl groups,
X is in each case a Cl or Br,
a = 0, 1 or 2 and b = 0, 1 or 2 where (a + b) = 2, and
x adopts a value from 0 to 5,
s = 0 or 1 and t = 0 or 1 where 0 ≤ (s + t) ≤ 1, and
y adopts a value from 1 to 5 where 3 ≤ (x + y) ≤ 5.

8. A process according to at least one of claims 1 to 4, **characterized in that** the reaction is carried out employing a linear polysiloxane mixture of the general formula V
R²ₐX_{b}SiO(R²_{f}XᵢSiO)_{q}(R²ₛXₜH₍₂₋ₛ₋ₜ₎SiO)ᵣSiR²ₐX_{b} (V),
where
R² is identical or different alkyl groups of 1 to 20 carbon atoms or aryl groups,
X is in each case a Cl or Br,
a = 0, 1, 2 or 3 and b = 0, 1, 2 or 3 where (a + b) = 3, f = 0, 1 or 2 and i = 0, 1 or 2 where (f + i) = 2, and
q ≥ 0, s = 0 or 1 and t = 0 or 1 where 0 ≤ (s + t) ≤ 1 and r ≥ 1 where 50 ≤ (q + r) ≤ 50,000.

9. A process according to at least one of claims 1 to 8, **characterized in that** the mass of platinum employed relative to the mass of the starting materials of the general formula I is in a ratio of from 1 : 100 to 1 : 100,000.

10. A process according to at least one of claims 1 to 9, **characterized in that** the reaction is carried out at a temperature in the range from 10 to 200°C.

11. A process according to claim 10, **characterized in that** the reaction is carried out at a temperature in the range from 20 to 150°C.

12. A process according to at least one of claims 1 to 11, **characterized in that** the reaction is carried out at a pressure in the range from 1 to 50 bar absolute.

13. A process according to claim 12, **characterized in that** the reaction is carried out at a pressure in the range from 1 to 10 bar absolute.

14. A process according to at least one of claims 1 to 13, **characterized in that** a fluoroalkyl-containing organosilicon compound obtained according to at least one of claims 1 to 13 which contains at least one Cl-Si or Br-Si group is then reacted with a monohydric alcohol and the product of the esterification is recovered from the reaction mixture.

## Revendications

1. Procédé de préparation de composés organo-siliciques porteurs de groupes fluoro-alkyle, par réaction d'oléfines porteuses de fluor avec un composé organo-silicique qui contient au moins un groupe H-Si, en présence d'un catalyseur au platine,
**caractérisé en ce qu'**
on met en oeuvre pour la réaction au moins une oléfine contenant du fluor de formule générale (I) :
R¹ - Y CH = CH₂ (I)
dans laquelle R1 représente un groupe alkyle mono-oligo- ou perfluoré ayant de 1 à 9 atomes de carbone et un groupe aryle mono-, oligo- ou perfluoré, et
Y est un groupe - CH₂,
ou de formule
CF₃ (CF₂)ₙ CH = CH₂
avec n = 3, 5, 7 ou 9
ou de formule
Rf CH₂ CH₂ O (C = O) [C (CH₃)] = CH₂
avec Rf = Cₙ F₂ₙ₊₁
dans laquelle n est 2 à 18,
on effectue la réaction en présence d'un catalyseur avec un complexe de Pt (0) et on obtient le composé organo silicique porteur de groupes fluoro alkyle à partir du mélange réactionnel.

2. Procédé selon la revendication 1,
**caractérisé en ce qu'**
on met en oeuvre un catalyseur avec un complexe de Pt (0) qui contient de 0,01 à 20 % en poids de platine.

3. Procédé selon la revendication 1 ou la revendication 2,
**caractérisé en ce qu'**
on met en oeuvre un catalyseur avec un complexe de Pt (0) du type KARSTEDT.

4. Procédé selon la revendication 3,
**caractérisé en ce que**
on met en oeuvre le bis [1,3-bis (eta-2-éthényl)-1,1,3,3-tétra-méthyldisiloxane]-platine(0), le triphényl-phosphine-[1,3-bis (eta-2-éthényl)1,1,3,3- tétra-méthyl-disiloxane]-platine(0), ou le 2,4, 6,8-tétra-éthényl-2,4,6,8-tétra-méthyl-cyclo-tétra-siloxane-platine(0).

5. Procédé selon au moins une des revendications 1 à 4,
**caractérisé en ce qu'**
on met en oeuvre pour la réaction, un hydrogéno silane de formule générale (II) :
H_{(4-a-b)} Si R²ₐ X_{b} (II)
dans laquelle
R² représente des groupes alkyle identiques ou difiérents ayant de 1 à 20 atomes de carbone ou des groupes aryle ;
X signifie Cl ou Br, et
a est égal à 0, 1, 2 ou 3 et b est égal à 0, 1, 2 ou 3 avec 1 ≤ (a + b) ≤ 3.

6. Procédé selon au moins une des revendications 1 à 4,
**caractérisé en ce qu'**
on met en oeuvre pour la réaction, un disiloxane de formule générale (III) :
R²ₐ X_{b} H_{(3-a-b)} Si OH_{(3-a-b)} R²ₐX_{b} (III)
dans laquelle R₂ représente des groupes alkyle identiques ou différents ayant de 1 à 20 atomes de carbone ou des groupes aryle,
X signifie respectivement un Cl ou un Br et a est égal à 0, 1, ou 2 et b est égal à 0, 1 ou 2 avec 1 ≤ (a + b) ≤ 2.

7. Procédé selon au moins une des revendications 1 à 4,
**caractérisé en ce qu'**
on met en oeuvre pour la réaction un siloxane cyclique de formule général (IV) :
(R²ₐ X_{b} Si O)ₓ (R²ₛ Xₜ H₍₂₋ₛ₋ₜ₎ Si O)_{y} (IV)
dans laquelle R² représente des groupes alkyle identiques ou différents ayant de 1 à 20 atomes de carbone ou des groupes aryle,
X représente respectivement un Cl ou un Br, a est égal à 0, 1 ou 2 et b est égale à 0, 1 ou 2 avec (a + b) = 2, et
x prend une valeur de 0 à 5 ; s est égal à 0 ou 1, et t est égal à 0 ou 1 avec 0 ≤ (s + t) ≤ 1 et y prend une valeur de 1 à 5 avec 3 ≤ (x + y) ≤ 5.

8. Procédé selon au moins une des revendications 1 à 4,
**caractérisé en ce qu'**
on met en oeuvre pour la réaction des mélanges de poly siloxanes linéaires de formule générale (V) :
(R²ₐX_{b} Si O (R²_{g} Xᵢ Si O)_{q} (R²ₛ XₜH₍₂₋ₛ₋ₜ₎ Si O)ᵣ Si R²ₐ X_{b} (V)
dans laquelle R² représente des groupes alkyle identiques ou différents ayant de 1 à 20 atomes de carbone, ou des groupes aryle ; X respectivement signifie un Cl ou un Br ; a est égal à 0, 1, 2 ou 3 et b est égal à 0, 1, 2, ou 3 avec (a + b) = 3 : f est égal à 0, 1, ou 2 et i est égal à 0, 1 ou 2 avec (f + i) = 2, et q est ≥ 0, s = 0 ou 1 et t = 0 ou 1, avec 0 ≤ (s + t) ≤ 1 et r ≥ 1 avec 50 ≤ (q + r) ≤ 50.000.

9. Procédé selon au moins une des revendications 1 à 8,
**caractérisé en ce que**
la masse mise en oeuvre de platine rapporté à la masse des substances utilisées de formule générale (I) se situe dans un rapport de 1 : 100 à 1 : 100 000.

10. Procédé selon au moins une des revendications 1 à 9,
**caractérisé en ce qu'**
on effectue la réaction à une température dans la zone de 10 à 200°C.

11. Procédé selon la revendication 10,
**caractérisé en ce qu'**
on effectue la réaction à une température dans la zone de 20 à 150°C.

12. Procédé selon au moins une des revendications 1 à 11,
**caractérisé en ce qu'**
on effectue la réaction sous une pression dans la zone de 1 à 50 bars absolu.

13. Procédé selon la revendication 10,
**caractérisé en ce qu'**
on effectue la réaction sous une pression dans la zone de 1 à 10 bars absolu.

14. Procédé selon au moins une des revendications 1 à 13,
**caractérisé en ce qu'**
on fait réagir un composé organo silicique portant des groupes fluoro alkyle qui est obtenu selon au moins une des revendications 1 à 13 », et qui contient au moins un groupe Cl-Si ou Br-Si, ensuite avec un alcool mono fonctionnel, et on isole le produit de l'estérification du mélange réactionnel.
